(19) Europäisches Patentamt
European Patent Office
Office européen des brevets

(11) **EP 2 144 054 A1**

(12) **EUROPEAN PATENT APPLICATION**

(43) Date of publication:
**13.01.2010 Bulletin 2010/02**

(51) Int Cl.:
*G01N 27/12* *(2006.01)*

(21) Application number: **08012276.5**

(22) Date of filing: **08.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **ETH Zurich**
**8092 Zurich (CH)**

(72) Inventors:
• **Mattmann, Moritz**
  **6315 Oberägeri (CH)**
• **Hierold, Christofer**
  **5400 Baden (CH)**
• **Helbling, Thomas**
  **8500 Frauenfeld (CH)**
• **Roman, Cosmin**
  **8051 Zürich (CH)**

(54) **Sensor and measurement method using one-dimensional nanostrustures**

(57)     A continuous one-dimensional nanostructure (2) is used in a sensor. The nanostructure is divided into four sections (5a, 5b, 5c, 5d) by means of five electrodes (4a - 4e). Two sections are exposed to a parameter to be measured, while the other sections are provided with a passivation layer (6a) that makes them insensitive to the parameter. The sections are arranged in a Wheatstone bridge for measurement. By using four sections of the same nanostructure in the Wheatstone bridge, the bridge is well balanced, which allows a more reliable measurement.

Fig. 1

# EP 2 144 054 A1

**Description**

<u>Technical Field</u>

The invention relates to the field of sensors and measurement methods based on one-dimensional nanostructures, such as nanotubes and nanowires. In particular, it relates to a sensing method, manufacturing method as well as to a sensor using such one-dimensional nanostructures.

<u>Background Art</u>

One-dimensional nanostructures, such as nanotubes and nanowires, but also strip-shaped thin material layers, have been found to be especially well suited for sensing purposes. Examples of sensing applications are e.g. described in US 2006/0188934 EP 1 384 612 or US 7 312 096 as well as in S. Ami et al., Balancing a Four-Branch-Single-Molecule Nanoscale Wheatstone Bridge, Nanotechnology 14 (2003), 283 - 289 and R. H. M. Chan et al., Rapid Assembly of Carbon Nanotubes for Nanosensing by Di-electrophoretic Force, Nanotechnology 15 (2004), S672 - S677.

These documents suggest to arrange four separate one-dimensional nanostructures in a Wheatstone bridge, with the electrical properties of the individual nanostructures depending differently on the parameter to be measured. The arrangement in a Wheatstone bridge allows to reduce the dependence of the measured signal on environmental factors and other undesired parameters that might affect the sensor.

Due to their inherently small size, however, one-dimensional nanostructures are virtually impossible to manufacture with exactly reproducible properties, which results in different sensitivities of these structures to environmental factors and makes it difficult to balance the Wheatstone bridge.

<u>Disclosure of the Invention</u>

Hence, it is a general object of the invention to provide a method and sensor of the type above that can be balanced more easily.

This object is achieved by the method and sensor of the independent claims.

Accordingly, a one-dimensional nanostructure is used, whose properties are sensitive to a first parameter, i.e. the parameter to be measured, as well as to at least one second parameter, which is a parameter not to be measured, such as an environmental factor. In order to reduce the influence of the second parameter on the measured signal, the nanostructure is divided into at least two sections, and electrodes are provided that contact each section. The first section is exposed to the first parameter, while the second section is not exposed to the first parameter or, at least exposed to the first parameter in different manner, such that the electrical properties of both sections will depend differently on the first parameter. At the same time, the electrical properties of both sections depend on the second parameter.

The nanostructure is continuous or consists of several severed parts of an originally continuous nanostructure. Hence, all sections have identical electrical properties and diameters.

Now, advantageously, a first and a second signal depending on the electrical properties of the first and the second section are measured. Obviously, the first and second signal will depend on the (undesired) second parameter. However, by combining the first and the second signal, the dependence on the second parameter can be decreased or even eliminated.

Hence, the invention allows to generate a sensing signal that is less dependent on (or even substantially independent of) the second parameter than the properties of the individual sections, while the sensing signal retains its sensitivity to the first parameter.

The invention is especially suited for building a Wheatstone bridge or half-bridge.

In particular, a Wheatstone bridge can be formed by dividing the one-dimensional nanostructure into at least four sections, advantageously of equal length.

The detector circuit for generating the sensing signal from the first and second signal can be formed by suitable electrical connections between the individual sections, e.g. such that they form a Wheatstone bridge as mentioned, or it may e.g. also be formed by electronic components that amplify and/or digitize the first and second signals and process them to eliminate the influence of the (undesired) second parameter.

The invention also relates to a method for manufacturing such a sensor.

<u>Brief Description of the Drawings</u>

The invention will be better understood and objects other than those set forth above will become apparent when consideration is given to the following detailed description thereof. Such description makes reference to the annexed drawings, wherein:

Fig. 1 shows a top view of a sensor with a single one-dimensional nanostructure with hidden parts of the nanostructure shown in dotted lines,

Fig. 2 shows an enlarged sectional view along line II-II of Fig. 1,

Fig. 3 shows a Wheatstone bridge,

Fig. 4 is a sectional view of an embodiment with sensitizing coating,

Fig. 5 shows another alternative balanced circuit,

Fig. 6 shows yet a further balanced circuit,

Fig. 7 shows a top view of an embodiment with several, one-dimensional nanostructures electrically contacted in parallel,

Fig. 8 shows a top view of a pressure sensor,

Fig. 9 shows a first manufacturing step for yet a further embodiment with a nanostructure consisting of several severed parts, and

Fig. 10 shows a second manufacturing step for the embodiment of Fig. 9.

Note: The figures are not true to scale. Some dimensions have been distorted for improved clarity.

Modes for Carrying Out the Invention

The term "one-dimensional nanostructure" used here as well as in the claims is defined as follows:

A "one-dimensional nanostructure" is a nanostructure having a width and height of no more than 100 nm and a length much larger than 100 nm, with width and height remaining substantially constant along the length of the structure. Since the space charge field of a local charge at the surface of such a nanostructure extends easily through the whole diameter of the structure, the presence of such a charge strongly affects the electrical properties, in particular the conductance, of the nanostructure. Hence, this type of nanostructures is especially suited for sensor applications. Examples of one-dimensional nanostructures include nanowires, nanotubes as well as strip-shaped thin layers having extensions as defined above.

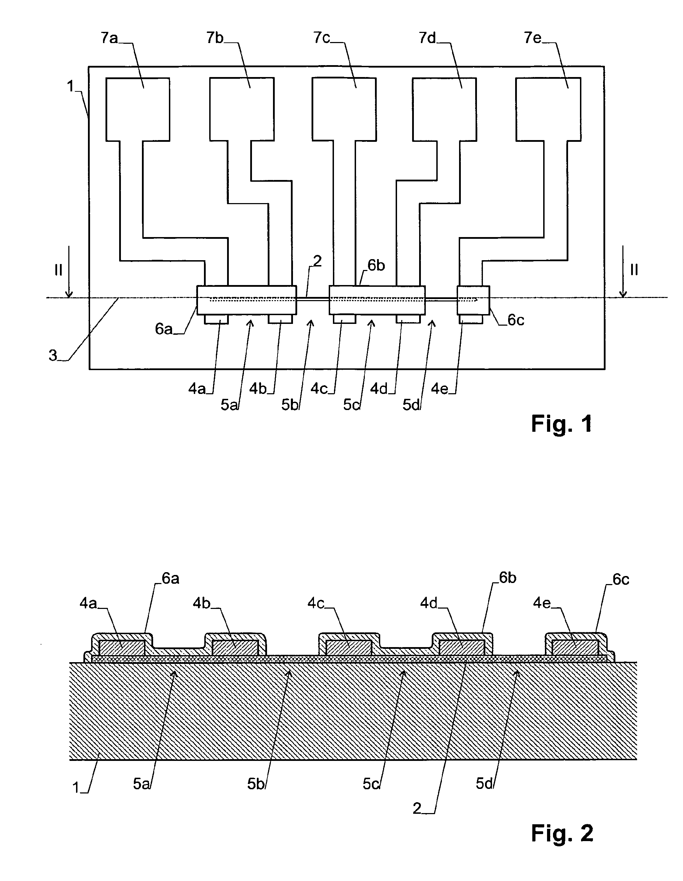

The sensor shown in Figs. 1 and 2 has a substrate 1, which may be of any suitable material, such as semiconductor or glass. Located on substrate 1 is a continuous, one-dimensional nanostructure 2, such as a carbon nanotube, with its longitudinal axis extending parallel to the surface of substrate 1 along line 3 of Fig. 1. As is typical for such one-dimensional nanostructures 2, the properties of the nanostructure are substantially invariant along its length.

Five metal, polysilicon or any other conductive material (e.g. carbon) electrodes 4a, 4b, 4c, 4d, 4e extend transversally to nanostructure 2 and are in electrical contact with the same. They divide nanostructure 2 into four sections 5a, 5b, 5c, 5d as shown in Fig. 2. The four sections between the electrodes have advantageously equal length. The electrodes contact both ends of each section.

Two sections, namely sections 5b and 5d, are, for the shown embodiment, in direct contact with the environment, while two other sections, namely sections 5a and 5c, are covered by passivation layers 6a, 6b. All electrodes 4a - 4e are covered by passivation layers, namely electrodes 4a, 4b by passivation layer 6a, electrodes 4c, 4d by passivation layer 6b, and electrode 4e by an additional passivation layer 6c. Advantageous materials for the passivation layer are $Al_2O_3$, SiN or $SiO_2$.

The passivation layers 6a, 6b, 6c may be individual, separated patches of a suitable layer material, as shown in Fig. 1, or they may be formed by one continuous passivation layer that has windows at the locations of the two sections 5b, 5d of nanostructure 2.

The electrodes 4a - 4e are e.g. connected to contact pads 7a - 7e, from where the device can be connected to evaluation circuitry. As it will be clear to a person skilled in the art, the evaluation circuitry may also be integrated at least partially on substrate 1 directly instead of being located externally to the device of Fig. 2.

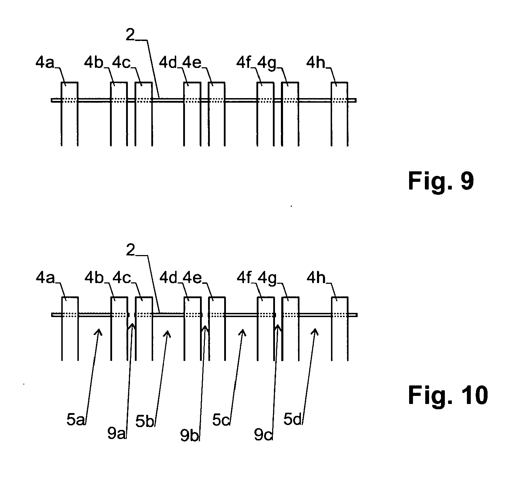

As follows from the above, the electrodes 4a - 4e divide nanostructure 1 into at least four sections 5a, 5b, 5c, 5d, two of which are covered by passivation layer 6a, 6b, while two other sections are left uncovered. The sections 5b, 5d not covered by passivation layer 6a, 6b are, in the following, also called the "first sections", while the covered sections 5a, 5c are called the "second sections". The first and second sections are arranged in alternating manner along the length of nanostructure 1. (Note: in the embodiment of Fig. 10 below, no alternating arrangement is required.)

In the following, the application of this structure as a sensor is described.

As is known to the person skilled in the art and as it has been described above, the electrical properties of a one-dimensional nanostructure are highly sensitive to local charges (e.g. generated by polar molecules adsorbed to the surface or in the vicinity of the nanostructure) and they can therefore be used as sensors, e.g. for liquids, biomolecules and gases. In a gas sensor, they e.g. allow to measure the concentration of a type of molecule. The sensitivity and selectivity of the nanostructure can be increased e.g. by suitable coating.

On the other hand, the electrical properties of nanostructure 2 also depend on other parameters, such as temperature.

A sensor is generally designed to measure a single or a few parameters, while it should be substantially insensitive to other parameters. In the following, the parameter to be measured is termed the "first parameter", while other parameters that affect the electrical properties of nanostructure 2 are called "second parameters". A typical first parameter is the concentration of a given substance in the environment, while a typical second parameter is temperature.

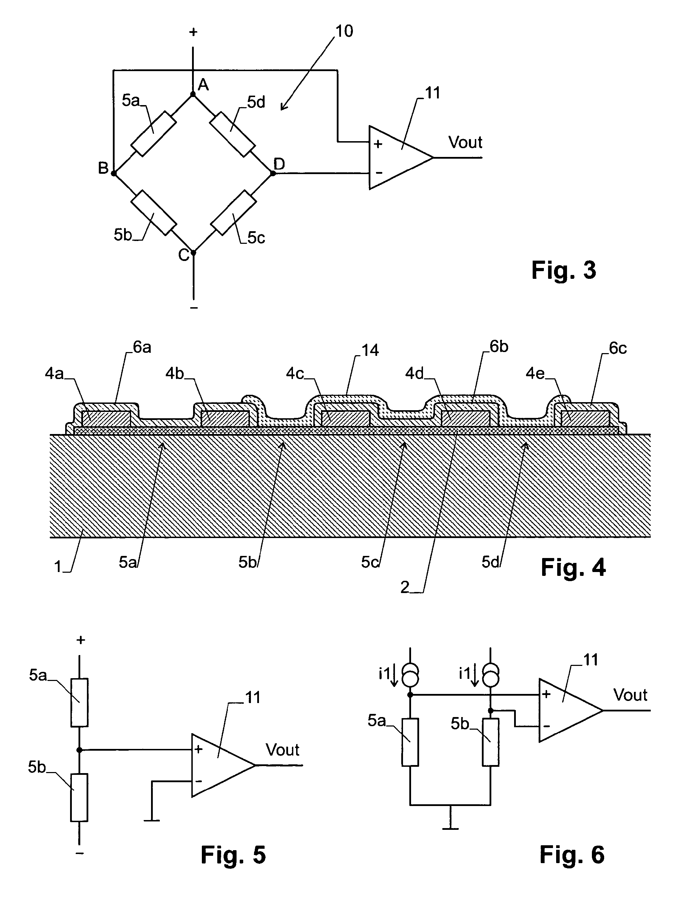

In order to generate a sensing signal that shows strong dependence on the first parameter while being substantially insensitive to the second parameter, a Wheatstone bridge 10 as shown in Fig. 3 can be used. The resistors between the four corners A, B, C, D of Wheatstone bridge 10 are formed by the consecutive four sections 5a, 5b, 5c, 5d of nanostructure 2, namely with the first sections 5b, 5d and the second sections 5a, 5c being arranged alternatingly along the four edges between the corners.

To operate Wheatstone bridge 10, a fixed voltage is applied between corners A, C and the voltage signals at the corners B and D are combined for generating the sensing signal in an operational amplifier 11. Operational amplifier generates a signal Vout that is proportional to the difference of the voltages at corners B and D.

If the first parameter is at a value where it does not affect the conductance of the exposed first sections 5b, 5d, the resistance of all sections 5a - 5d is substantially the same (because all sections have the same length and the electrical properties of the nanostructure do not vary along its longitudinal axis). In that case, the sensing signal Vout is substantially zero.

When the first parameter (e.g. the concentration of the substance to be measured) varies, the resistance of the first sections 5b, 5d will vary as well, which will cause sensing signal Vout to become non-zero. On the other hand, when the second parameter (e.g. temperature) varies, all sections 5a, 5b, 5c, 5d will change their properties in identical manner. Thus, the sensing signal Vout will not be affected by a change of the second parameter, while it is sensitive to the first parameter.

In the embodiment of Figs. 1 and 2, the second sections 5a, 5c are "shielded" from the first parameter (i.e. the parameter to be measured) by means of the passivation layers 6a, 6b. In addition to this or alternatively thereto, and as shown in the embodiment of Fig. 4, the first sections 5b, 5d can be provided with a coating 14 that makes their electrical properties sensitive (or more sensitive) to the parameter to be measured. Examples of suitable coatings are given in section 5 of K. Balasubramanian and M. Burghard, Chemically Functionalized Carbon Nanotubes, small 2005, 1(2), 180 - 192. One suitable coating is for example polyethyleneimine (PEI) to enhance the sensitivity of a carbon nanotube based sensor to N02 while causing insensitivity to NH3, as described in Pengfei Qi et al., Toward Large Arrays of Multiplex Functionalized Carbon Nanotube Sensors for Highly Sensitive and Selective Molecular Detection, Nano Lett., 3(3), 247 - 351 (2003).

A device of the type of Figs. 1 and 2 or 4 can e.g. be manufactured using the techniques described in T. Helbling et al., Sensing NO2 with individual suspended single-walled carbon nanotubes, Sensors and Actuators B: Chemical, 132(2), 491-497 (2008).

In a typical fabrication process, a doped silicon wafer with a top layer of $SiO_2$ is used as a substrate 1. Iron loaded ferritin proteins are adsorbed on this substrate and the protein shells are burned off on a hotplate, leaving individual, separate iron oxide particles of typical diameters of 1 to 5 nm. The sample is then placed in a furnace for LPCVD and heated to 850°C. Hydrogen is introduced for reducing the iron oxide particles to iron, which act as growth catalysts. Methane is added and carbon nanotubes are grown from the iron particles.

In a next step, a carbon nanotube has to be localized and electrodes have to be applied. For this purpose, marker structures are applied to the substrate by means of electron beam lithography, metal evaporation and metal liftoff, and the relative position of the nanotubes are subsequently measured by means of an atomic force microscope. Again, electron beam lithography, metal evaporation and subsequent metal liftoff are used to create the electrodes. After forming the electrodes, the passivation layer is applied, see e.g. S. K. Kim et al., Atomic Layer Deposited Al2O3 for Gate Dielectric and Passivation Layer of Single-Walled Carbon Nanotube Transistors, Appl. Phys. Lett. 90, 163108 (2007).

The above is but one possible fabrication technique that allows to grow a one-dimensional nanostructure on a substrate. It has the drawback that it does not allow to position or align the nanostructure in predictable manner, therefore making it necessary to locate a suitable nanostructure after fabrication and to place the electrodes accordingly.

Other techniques have been described for growing nanostructures, with important examples being listed in sections 3 and 4 of Y. Yan et al., Advances in Carbon-Nanotube Assembly, small 2007, 3(1), 24 - 42.

In the embodiments shown so far, four sections of the nanostructure have been arranged as a full Wheatstone bridge. It is, however, also possible to use other circuit geometries. In general, at least two sections of the nanostructure are required, with the electrical properties of the first section depending more strongly on the first parameter p1 (the parameter to be measured) than those of the second section, while both sections depend in similar manner on the second parameter p2 (the parameter of no interest). Two signals s1 and s2 are generated (such as the voltages at points B and D in the Wheatstone bridge of Fig. 3) that depend on the electrical properties of the first and the second section, respectively, namely

$$s1 = f1(p1, p2) \text{ and} \qquad (1)$$
$$s2 = f2(p1, p2),$$

with two different functions f1, f2. Equation (1) can then be solved by a detector circuit (such as operational amplifier 11 of Fig. 3) in order to generate a sensing signal that is independent of second parameter p2 or (e.g. if equation (1) is solved in approximation only) a sensing signal that is at least less dependent on second parameter p2 than the electrical properties of the first section of the nanostructure.

The Wheatstone bridge is a typical example of such a circuit type, where the first and second signals s1, s2 are the input voltages to operational amplifier 11.

An alternative circuit is shown in Fig. 5, where nanostructure 2 has been divided into two sections 5a, 5b only, with section 5a being covered by passivation layer 6a, while section 5b is sensitive to the parameter to be measured. Sections 5a and 5b are arranged in series in a voltage divider, over which a voltage is applied, such that the same current is sent through both sections. The voltage at the center point of the voltage divider is measured by an amplifier 11. In this embodiment, if first parameter p1 varies, the measured voltage varies. If second parameter p2 varies, the measured voltage does, in first approximation, not vary. In this embodiment, the first and second signals s1, s2 are the voltage drops over the two sections 5b and 5a, respectively.

Similarly, in the embodiment of Fig. 6, nanostructure 2 has also been divided into two sections 5a, 5b only, with the point between the two sections being set to a reference potential (such as ground). Equal currents i1 are applied to the two sections, such that the currents e.g. enter both ends of the nanostructure and exit at the center electrode thereof. The difference of the voltage drop over the first and the second section is measured by an amplifier 11. Again, if first parameter p1 varies, the measured voltage varies. If second parameter p2 varies, the measured voltage does, in first approximation, not vary.

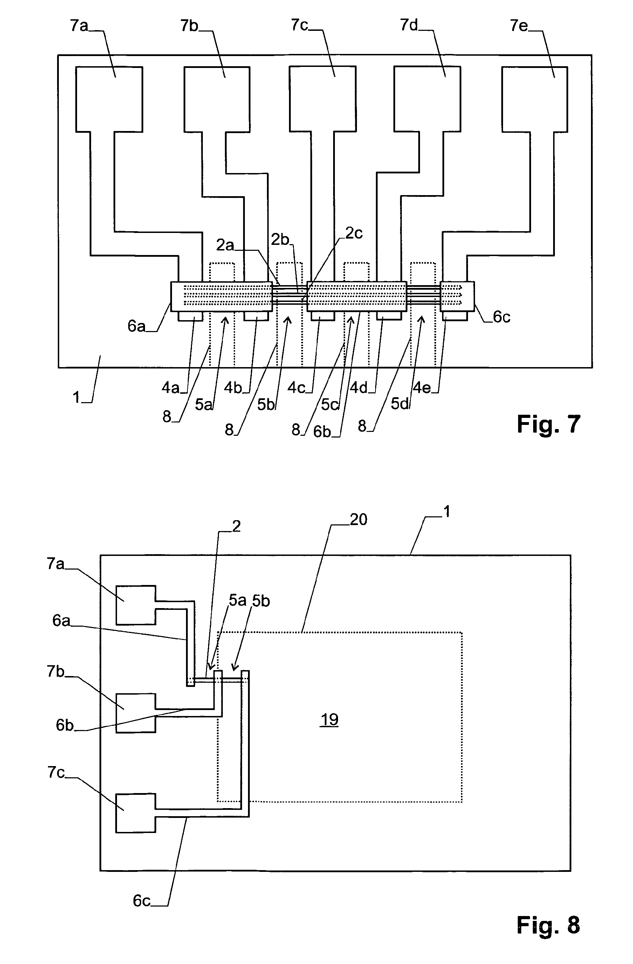

In the above examples, only one single nanostructure 2 has been used for the measurement. The present invention can, however, also be used with several nanostructures 2a, 2b, 2c, such as it is e.g. shown in Fig. 7, with each nanostructure being divided into first and second sections. If the nanostructures are close to each other on the same substrate, they can be electrically connected in parallel, such as shown in Fig. 7, the same electrodes 4a, 4b, 4c, 4d, 4e can be used for forming the first and second sections 5a, 5b, 5c, 5d on all nanostructures.

Advantageously, and as shown in dotted lines in Fig. 7, gate electrodes 8 can be arranged at least at some of the sections 5a, 5b, 5c, 5d and electrically insulated from the sections. By applying a voltage to these electrodes, the field within the nanostructure can be modified and therefore the conductance of the nanostructures can be varied in the corresponding section. This e.g. allows to perfectly balance the resistivity of circuit formed by the sections. Gating electrodes of this type can also be applied to any of the other embodiments of the sensor shown here.

In the embodiments described so far, nanotubes have been mentioned as suitable nanostructures. The invention can, however, also be used with other types of nanostructures, such as graphene nanoribbons, nanotubes of boron nitride or proteins, or nanowires of doped silicon, InAs, Ge, GaAs or of other III-V-semiconductors. Suitable methods for fabricating of such structures are known to the person skilled in the art.

In the above embodiments, passivation layers 6a, 6b and/or coating 14 have been used to make the properties of first sections 5b, 5d more dependent on the parameter to be measured than those of the second sections 5a, 5c. Depending on the sensor, other measures can be provided for the same purpose. For example, in a pressure sensor, first sections 5b, 5d can be arranged at locations where a membrane is strongly bent under the applied pressure variations, while second sections 5a, 5c can be arranged at locations where this is not the case.

An example for such a sensor is schematically depicted in Fig. 8. In this embodiment, one-dimensional nanostructure 2 is divided into two sections 5a, 5b and spans the edge of a membrane 19 extending over an opening 20 (shown with a dotted line in Fig. 8) of substrate 1. First section 5b is arranged on the flexible, unsupported part of membrane 19 over opening 20, while second section 5a is arranged over the bulk of the substrate 1. Hence, first section 5b is deformed when the applied pressure deforms membrane 19, while second section 5a isn't. Hence, the electrical properties of first section 5b depend on the pressure, while those of second section 5a don't. Hence, the same techniques as described above can be used to analyze the electrical properties of the two sections. In particular, since nanostructure 2 is divided into two sections only, the circuits of Figs. 5 and 6 can advantageously be used.

In the embodiments shown so far, one or more continuous nanostructures 2 were used to form the sections 5a, 5b, 5c, 5d. It must be noted, however, that the nanostructure 2 does not have to be continuous at the time the measurement is made. It is also possible to cut a continuous nanostructure 2 into several parts and then to use the parts to form the sections 5a, 5b, 5c, 5d.

This is illustrated in Figs. 9 and 10.

Fig. 9 shows a first manufacturing step of such a device. Here, a continuous one-dimensional nanostructure 2 is manufactured, e.g. by growing as described above, and contacted by eight electrodes 4a - 4h. Then, as shown in Fig. 10, the nanostructure 2 is severed at locations 9a, 9b, 9c, e.g. by etching techniques, into several parts. In the present embodiment, each such part corresponds to one section 5a, 5b, 5c, 5d, but it is e.g. also possible to form only two parts, each of which corresponds to two of the sections.

The advantage of the embodiment of Fig. 10 is the fact that the electrical potentials the parts or sections 5a, 5b, 5c, 5d are independent of each other, which allows to use of a wider variety of detection circuitry.

In general, the present sensor can be manufactured by the following steps:

forming the one-dimensional continuous nanostructure 2 whose electrical properties are sensitive to the first parameter to be measured and sensitive at least to the second parameter not to be measured,

providing the electrodes 4a, 4b..., which divide nanostructure 2 into at least one first and at least one second longitudinal section 5b, 5d; 5a, 5c,

preparing the sections 5b, 5d; 5a, 5c in such a manner that the electrical properties of the first and the second section are differently dependent on the first parameter, e.g. by covering part of them with the passivation layers 6a, 6b, 6c, and

providing the detection circuit 10, 11 adapted to generate a sensing signal dependent on the first parameter.

As mentioned, it is further possible to sever (cut apart) the originally continuous nanostructure 2 into several parts, either before or after contacting it with the electrodes.

While there are shown and described presently preferred embodiments of the invention, it is to be distinctly understood that the invention is not limited thereto but may be otherwise variously embodied and practiced within the scope of the following claims.

## Claims

1. A sensor comprising
a one-dimensional nanostructure (2) whose electrical properties are sensitive to a first parameter to be measured and sensitive at least to a second parameter not to be measured, wherein said nanostructure (2) has at least one first and at least one second longitudinal section (5b, 5d; 5a, 5c) and wherein said sensor is designed such that the electrical properties of said first and said second section are differently dependent on said first parameter,
electrodes (4a - 4h) contacting each section (5b, 5d; 5a, 5c),
a detector circuit (10, 11) adapted to generate a sensing signal dependent on said first parameter,
wherein said one-dimensional nanostructure is continuous or consists of several severed parts of an originally continuous one-dimensional nanostructure.

2. The sensor of claim 1 wherein said electrodes (4a - 4e) contact the ends of each section.

3. The sensor of claim 2 wherein said detector circuit (10, 11) is adapted to combine a first and a second signal depending on the electrical properties of said first and said second sections (5b, 5d; 5a, 5c), respectively, to generate said sensing signal (Vout) such that said sensing signal (Vout) is less dependent on said second parameter than the first signal.

4. The sensor of claim 3 wherein said one-dimensional nanostructure (2) is divided into at least four sections (5b, 5d; 5a, 5c), wherein the four sections are arranged in a Wheatstone bridge (10), and in particular wherein said four sections (5b, 5d; 5a, 5c) have equal lengths.

5. The sensor of claim 4 having two of said first sections (5b, 5d) and two of said second sections (5a, 5c), wherein the first sections and the second sections are arranged alternatingly along a length of said nanostructure (2).

6. The sensor of any of the preceding claims wherein said second section (5a, 5c) is covered by a passivation layer (6a, 6b) shielding it at least partially from said first parameter.

7. The sensor of any of the preceding claims wherein said first section (5b, 5d) is coated with a coating (14) making the electrical properties of said first section (5b, 5d) sensitive to said first parameter.

8. The sensor of any of the preceding claims wherein said first and said second sections (5b, 5d; 5a, 5c) have equal lengths.

9. The sensor of any of the preceding claims wherein said nanostructure (2) is arranged on a substrate (1), wherein at least one passivation layer (6a, 6b, 6c) is arranged on said substrate (1) and covers said at least one second section of said nanostructure (2) while not covering said at least one first section of said nanostructure (2).

10. The sensor of any of the preceding claims comprising several nanostructures (2a, 2b, 2c) with each nanostructure being divided into first and second sections (5b, 5d; 5a, 5c).

11. The sensor of any of the preceding claims further comprising at least one gate electrode (8) isolatingly arranged at least at one of said sections (5b, 5d; 5a, 5c).

12. A method for measuring a first parameter by means of a one-dimensional nanostructure (2) whose electrical properties are sensitive to said first parameter and sensitive at least to a second parameter not to be measured, wherein said nanostructure (2) is continuous or consists of several severed parts of an originally continuous one-dimensional nanostructure, said method comprising the steps of
exposing at least one first longitudinal section (5b, 5d) of said nanostructure (2) to said first parameter while not exposing or differently exposing at least one second longitudinal section (5a, 5c) of said
nanostructure (2) to said first parameter such that the electrical properties of said first section (5b, 5d) depends more strongly on said first parameter than the electrical properties of said second section (5a, 5c) while the electrical properties of both sections (5b, 5d; 5a, 5c) depend substantially in the same manner of said second parameter,
generating a sensing signal dependent on said first parameter from at least a first and a second signal depending the electrical properties of said first and said second sections.

13. The method of claim 12 further comprising the step of combining said first and said second signal to generate said sensing signal such that it is less dependent on said second parameter than the first signal.

14. The method of claim 13 wherein, for measuring said first and said second signal,
a current is sent through both said first and second sections (5b, 5d; 5a, 5c) and
a voltage is detected at a point between said first and said second section.

15. The method of claim 13 wherein, for measuring said first and said second signal,
a point between said first and said second section is set to a reference potential,
equal but opposite currents are sent through said first and said second sections (5b, 5d; 5a, 5c),
a difference of a voltage drop over said first and said second section is measured.

16. The method of claim 13 wherein, for measuring said first and said second signal,
four sections of said one-dimensional nanostructure (2) are arranged in a Wheatstone bridge (10) with said first signal corresponding to a voltage at a first corner (B) of said Wheatstone bridge (10) and said second signal corresponding to a voltage (D) at a second corner, opposite said first corner (B), in said Wheatstone bridge (10).

17. A method for manufacturing a sensor, in particular according to one of the claims 1 - 11, comprising the steps of
forming a one-dimensional continuous nanostructure (2) whose electrical properties are sensitive to a first parameter to be measured and sensitive at least to a second parameter not to be measured,
providing electrodes dividing said nanostructure (2) into at least one first and at least one second longitudinal section (5b, 5d; 5a, 5c),
preparing said sections (5b, 5d; 5a, 5c) such that the electrical properties of said first and said second section are differently dependent on said first parameter,
providing a detection circuit (10, 11) adapted to generate a sensing signal dependent on said first parameter.

18. The method of claim 17 further comprising the step of severing said one-dimensional continuous nanostructure (2) into at least two parts.

**Fig. 1**

**Fig. 2**

**Fig. 3**

**Fig. 4**

**Fig. 5**

**Fig. 6**

Fig. 7

Fig. 8

**Fig. 9**

**Fig. 10**

Europäisches Patentamt
European Patent Office
Office européen des brevets

**EUROPEAN SEARCH REPORT**

Application Number

EP 08 01 2276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 589 333 A (HEWLETT PACKARD DEVELOPMENT CO [US]) 26 October 2005 (2005-10-26) | 1-5,7,8, 10-12 | INV. G01N27/12 |
| Y | * column 1, line 45 - column 3, line 20; figures 1-3 * | 6,9 | |
| Y | EP 1 432 019 A (HEWLETT PACKARD DEVELOPMENT CO [US]) 23 June 2004 (2004-06-23) * column 8, line 17 - line 21 * | 6,9 | |
| D,X | US 2006/188934 A1 (CHANG YING-LAN [US] ET AL) 24 August 2006 (2006-08-24) * the whole document * | 1-12 | |
| X | BAUERDICK S ET AL: "Direct wiring of carbon nanotubes for integration in nanoelectromechanical systems" JOURNAL OF VACUUM SCIENCE AND TECHNOLOGY: PART B, AVS / AIP, MELVILLE, NEW YORK, NY, US, vol. 24, no. 6, 4 December 2006 (2006-12-04), pages 3144-3147, XP012091811 ISSN: 1071-1023 * figures 4(b),5 * | 17 | |
| A | US 5 367 283 A (LAUF ROBERT J [US] ET AL) 22 November 1994 (1994-11-22) * column 3, line 39 - column 4, line 57; figure 2 * | 1-16 | |

TECHNICAL FIELDS SEARCHED (IPC)

G01N

The present search report has been drawn up for all claims

| Place of search | Date of completion of the search | Examiner |
|---|---|---|
| Munich | 13 November 2008 | Purdie, Douglas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 01 2276

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2008

| Patent document cited in search report | | | Publication date | Patent family member(s) | | | Publication date |
|---|---|---|---|---|---|---|---|
| EP 1589333 | | A | 26-10-2005 | JP | 2005308749 | A | 04-11-2005 |
| | | | | US | 2005239230 | A1 | 27-10-2005 |
| EP 1432019 | | A | 23-06-2004 | JP | 4041063 | B2 | 30-01-2008 |
| | | | | JP | 2004202682 | A | 22-07-2004 |
| | | | | US | 2006076644 | A1 | 13-04-2006 |
| | | | | US | 2004121509 | A1 | 24-06-2004 |
| US 2006188934 | | A1 | 24-08-2006 | WO | 2006091309 | A2 | 31-08-2006 |
| US 5367283 | | A | 22-11-1994 | US | 5451920 | A | 19-09-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060188934 A
- EP 1384612 A

- US 7312096 B

**Non-patent literature cited in the description**

- **S. Ami et al.** Balancing a Four-Branch-Single-Molecule Nanoscale Wheatstone Bridge. *Nanotechnology,* 2003, vol. 14, 283-289
- **R. H. M. Chan et al.** Rapid Assembly of Carbon Nanotubes for Nanosensing by Di-electrophoretic Force. *Nanotechnology,* 2004, vol. 15, S672-S677
- **M. Burghard.** *Chemically Functionalized Carbon Nanotubes, small,* 2005, vol. 1 (2), 180-192
- **Pengfei Qi et al.** Toward Large Arrays of Multiplex Functionalized Carbon Nanotube Sensors for Highly Sensitive and Selective Molecular Detection. *Nano Lett.,* 2003, vol. 3 (3), 247-351

- **T. Helbling et al.** Sensing NO2 with individual suspended single-walled carbon nanotubes. *Sensors and Actuators B: Chemical,* 2008, vol. 132 (2), 491-497
- **S. K. Kim et al.** Atomic Layer Deposited Al2O3 for Gate Dielectric and Passivation Layer of Single-Walled Carbon Nanotube Transistors. *Appl. Phys. Lett.,* 2007, vol. 90, 163108
- **Y. Yan et al.** *Advances in Carbon-Nanotube Assembly, small,* 2007, vol. 3 (1), 24-42